# EUROPEAN PATENT APPLICATION

(11) **EP 0 801 500 A2**
(43) Date of publication of application: **15.10.1997**
(21) Application number: 97302235.3
(22) Date of filing: 01.04.1997
(51) Int. Cl.: H04N 7/16

(54) **Method and apparatus for selectively transmitting information within a colour video signal**

(30) Priority: 02.04.1996 GB 9606957
(71) Applicant: BRITISH BROADCASTING CORPORATION, London W1A 1AA (GB)
(72) Inventor: Salmon, Richard Aubrey c/o BBC Research &, Tadworth Surrey KT20 6NP (GB); Easterbrook, James Edward c/o BBC Research &, Tadworth Surrey KT20 6NP (GB); Roberts, Alan c/o BBC Research &, Tadworth, Surrey KT20 6NP (GB); Russell, Richard Thomas c/o BBC Research &, Tadworth Surrey KT20 6NP (GB); Oliphant, Andrew c/o BBC Research &, Tadworth Surrey KT20 6NP (GB); Thomas, Graham Alexander, Dr. c/o BBC Research &, Tadworth Surrey KT20 6NP (GB)
(74) Representative: Abnett, Richard Charles

(57) **Abstract**

In a colour video transmission system, intelligible information, such as text, is transmitted on the blue colour component of the signal, and interference is transmitted on the red and green colour components. When the video display is viewed normally, the information cannot be discerned. If viewed through blue filter or blue spectacles, the green and red interference is rendered invisible and the information can now be seen. The interference may be random noise, but is preferably similar in type to the desired information, e.g. text. No modification is required to the receiver, and two viewers viewing the same display can decide independently whether to see the hidden information or not.

## Description

### Background of the Invention

This invention relates to colour video systems and more particularly to a method and apparatus for selectively carrying information within a colour video signal.

Modern television signals carry visible information in such a way that all television receivers will display essentially the same information. Indeed, in designing new or altered standards, great care is taken to ensure compatibility so that all receivers will still display essentially the same information. The video signal is however sometimes adapted to carry additional information, e.g. teletext, but this requires special circuitry at the receiver to display the teletext information.

Attempts have been made to transmit depth information to give a 3D effect. Some such proposals have required the viewer to wear special glasses, each lens of which has different characteristics, so that the two eyes see slightly different pictures to give the required 3D illusion.

However we have appreciated that the programming possibilities could be greatly enhanced if additional information could be carried in such a way that it could be viewed by selected viewers only without the need for expensive additions to the receiving equipment. It would be particularly valuable if, when a television receiver is being watched by several different people, some of the viewers could see the additional material while others could not.

### Summary of the Invention

The invention is defined in the independent claims below, to which reference should now be made. Advantageous features of the invention are set forth in the appendant claims.

In a preferred colour video transmission system described in more detail below, intelligible information, such as text, is transmitted on the blue colour component of the signal, and masking signals are transmitted on the red and green colour components. When viewed normally, the information cannot be discerned. If viewed through a blue filter or blue spectacles, the green and red interference is rendered invisible and the information can now be seen. No modification is required to the receiver, and two viewers viewing the same display can decide independently whether to see the hidden information or not.

### Brief Description of the Drawings

The invention will be described by way of example with reference to the drawings, in which:
**Figure 1** shows a video display with a hidden area in accordance with the invention;
**Figure 2** is a schematic diagram illustrating the modifications required to a transmitter so as to implement the system;
**Figure 3** is a diagrammatic plan view of a receiver adapted in accordance with the invention;
**Figure 4** is a similar view of a receiver in which one viewer can see the hidden information and the other can not; and
**Figure 5** is a view similar to Figure 1 showing what is seen in the arrangement of Figure 3.

### Detailed Description of the Preferred Embodiment

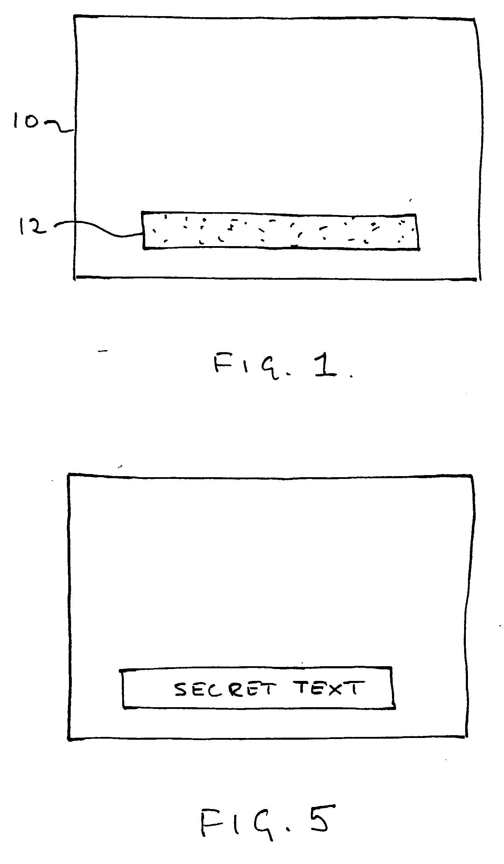

Figure 1 shows a video display 10 of a signal which carries additional hidden information in accordance with the invention. While in principle the information could cover the whole screen, in practice it will normally occupy a part only of the screen, and in this example occupies a horizontal band 12 near the bottom of the image area.

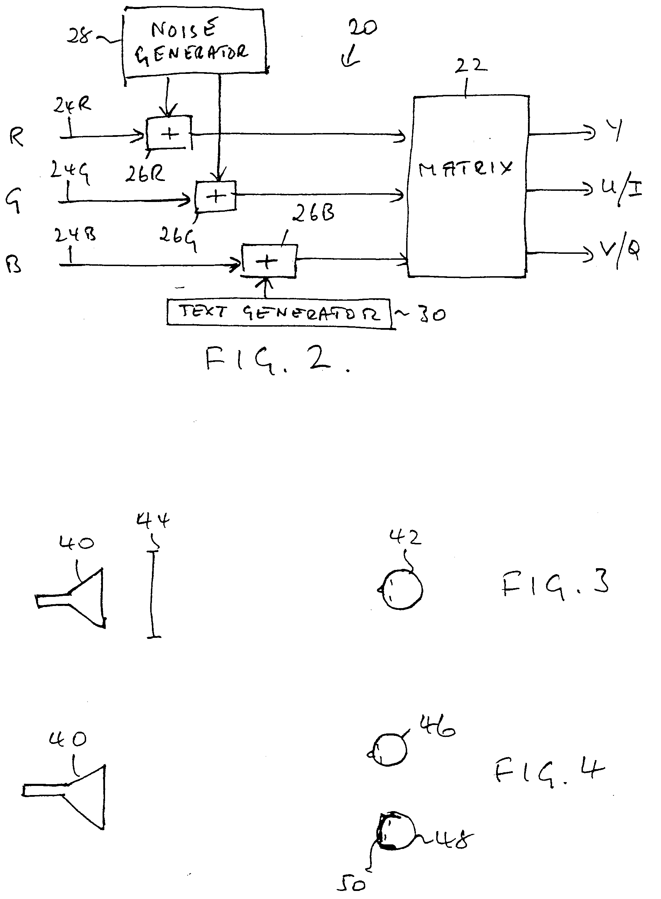

In the transmitter, as shown in Figure 2, special circuitry 20 is included prior to the colour encoding matrix 22, to operate on the red (R), green (G), and blue (B) signals received on lines 24R, 24G, 24B from a camera or other signal source, not shown. In each of the signal paths there is a respective combining circuit 26R, 26G and 26B. These combining circuits preferably take the form of a fast switch, such as is commonly used in in-lay systems, and are themselves well-known. The combining circuits 26R and 26G receive at their second inputs a respective one of two independent outputs of a noise generator 28, whereas the combining circuit 26B receives at its second input the output of a text generator 30. The rest of the transmitter is conventional.

The combining circuits are gated so that, during the portion of the video signal which corresponds to the area 12, they pass the signals at their second inputs, whereas at other times they pass the R, G, B signals respectively at their first or main inputs. The interfering signals applied to combining circuits 26R and 26G could be any combination of fixed patterns, text, or noise. If the interfering signals consist of noise, they could be of varying amplitude, but preferably take one of two possible values on a random basis, these values being close to white and black levels respectively. This may be termed 'binary' noise. The signal from the text generator 30 is a white level in the text areas and at black level elsewhere in the box 12. Alternatively, it may have lower modulation between two grey levels.

The resultant signal, when viewed as in Figure 1, appears simply to contain the interfering signal in the area 12. The blue component carries text information, but the interference applied to the green and red signals, which varies across the box 12 and also preferably with time, effectively masks the blue component so that the text cannot be read.

However, if the screen is viewed through a blue filter, namely a filter of the same colour as the wanted light, then the green and red light is attenuated, and the text which is transmitted on the blue component can now be seen.

The necessary filtering can be achieved in two principal ways. A first is shown in Figure 3. Here the light-emissive display device of a receiver 40 is being viewed by a single viewer 42. To provide the necessary filtering, a blue filter 44 is located close to the screen of the display and is conveniently mounted upon it. Then all the viewers will be able to see the text. In Figure 4 there are two viewers 46 and 48. The first viewer 46 cannot see the additional text, but sees only a display as in Figure 1, with the interfering signal such as random noise in the box 12. The second viewer 48, however, wears special blue spectacles 50 and thus can discern the text material, as the green and red components are again attenuated. He will see a display as shown in Figure 5. The two lenses of the spectacles are identical in optical properties, and are uniform across the area of the field of view.

### Possible Modifications

Many modifications may be made to the system described and illustrated. While the system has been described as carrying text in hidden form, other information such as graphics (in monochrome) could be carried. In this case the text generator 30 is replaced by a graphics generator. In either way the area 12 of the screen is seen by a normal viewer as carrying random noise or some other interfering signal, whereas a viewer observing the screen through a coloured filter or coloured glasses will see the message or other information.

For best results we have found that the interference should be of similar nature to the wanted signal, i.e., text in red and/or green will successfully mask text in blue, and may be better than random noise. However it is beneficial to include some random noise which preferably varies from frame to frame, though it could possibly be static. The blue filter should have close to zero transmittance of the red and green primaries of the display. Some temporal (time-varying) noise could also be added to the blue signal, which will be less visible to the eye due to the long response time of the eye to low-level luminance signals.

In principle it would be possible to achieve the desired effect by adding the information signal to the red signal, and noise to one or both of the green and blue signals, and then using a red-coloured filter. Equally the filter could be green, and the information combined with the green signal, with noise on the red and/or blue. However, the system illustrated, in which the hidden text is carried on the blue component, should be more successful because blue has an inherently much lower luminance contribution than red or green, and thus the information is more easily masked by the interference.

As described, the signals have been processed in colour-component form. In alternative arrangements the processing could be applied to the encoded signal, for example in YUV (for PAL) or YIQ (for NTSC) form, or in YCᵣC_{b} form.

When the interference is added to the baseband colour component signals, as shown, they will subsequently be filtered in the encoding operation to the chrominance bandwidth. This will limit the interference detail somewhat. It may then be desirable to add some random noise to the luminance signal (Y) which is not so severely band-limited.

The video signal which is transmitted is unusual in that, over the area of the box 12, the red and green components may be random whereas the blue component carries meaningful information. The signal can be recorded in conventional fashion on a normal video cassette recorder.

Using the system described, in its basic or modified form, new programming opportunities are made available. For example, in a quiz show, the answers to the questions could be transmitted as hidden text, so that viewers who wished to play with the contestants would not see them whereas those who wished could use the filter to see the answers at the same time as the contestants were answering the questions. Many other possibilities will be apparent to the reader.

The principles are not however restricted to the broadcasting field, but could be employed in other video systems, e.g. multi-media.

## Claims

1. A method of selectively viewing information displayed on a colour video display, comprising:
transmitting on one colour signal component information to be selectively viewed,
transmitting on at least one other colour signal component at the same region of the image an interfering signal which contains information which is misleading and/or unintelligible,
applying the colour signal components to a video display device, and
selectively viewing the video display device either through a colour filter so as to discern the transmitted information, or without such colour filter so that the transmitted information is hidden.

2. A method according to claim 1, in which the said one colour signal is a blue colour component signal.

3. A method according to claim 1 or 2, in which the interfering signal comprises a random noise signal.

4. A method according to claim 3, in which the random noise signal randomly takes one or two values.

5. A method as claimed in claim 3, in which the random noise signal is time variant, e.g. varies from frame-to-frame.

6. A method according to claim 1 or 2, in which the interfering signal comprises text.

7. A method according to claim 1 or 2, in which the interfering signal comprises graphic patterns.

8. A method according to claim 1, in which additional interference is added to the luminance signal.

9. A system for selectively viewing information, comprising:
means for combining one colour signal component with information to be selectively viewed,
means for combining at least one other colour signal at the same region of the image with an interfering signal which does not contain intelligible information,
a colour video display device for displaying the colour signal components, and
colour filter means for viewing the colour video display device so as to discern the transmitted information.

10. A system according to claim 9, in which the colour filter means comprises a filter located adjacent to the display.

11. A system according to claim 9, in which the colour filter means comprises a pair of spectacles.

12. A colour video signal, in which the signal represents a region in which a first colour component conveys intelligible information and the other colour components convey only unintelligible interference.

13. A colour video signal according to claim 12, in which the unintelligible interference is time-variant.

14. The use, in order to view a colour video signal according to claim 12 or 13, of a uniform filter of colour corresponding to the colour represented by the first colour component, the filter being located in front of a colour video display device.

15. The use, in order to view a colour video signal according to claim 12 or 13, of a pair of spectacles of uniform optical properties and operative as a filter of colour corresponding to the colour represented by the first colour component, the filter being located in front of a colour video display device.
